(19) Europäisches Patentamt
European Patent Office
Office européen des brevets

(11) **EP 3 703 170 A1**

(12) **EUROPEAN PATENT APPLICATION**

(43) Date of publication:
**02.09.2020 Bulletin 2020/36**

(21) Application number: **19159662.6**

(22) Date of filing: **27.02.2019**

(51) Int Cl.:
*H01M 10/052* (2010.01)        *C01F 5/00* (2006.01)
*C01F 7/00* (2006.01)          *C01F 11/00* (2006.01)
*C01G 15/00* (2006.01)         *H01M 10/0562* (2010.01)
*H01M 10/42* (2006.01)         *C01G 3/00* (2006.01)
*C01G 9/00* (2006.01)          *C01G 17/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Technische Universität Graz
8010 Graz (AT)**

(72) Inventor: **Rettenwander, Daniel
8044 Graz (AT)**

(74) Representative: **Patentanwaltskanzlei
Matschnig & Forsthuber OG
Biberstraße 22
Postfach 36
1010 Wien (AT)**

(54) **SOLID ION CONDUCTOR HAVING A FLUORIDE GARNET-LIKE STRUCTURE**

(57)    The present invention relates to the use of cryolithionite-based lithium-containing fluorides having a garnet crystal structure for use as solid ion conductors or as constituents of solid ion conductors. The present invention also relates to novel lithium-containing fluorides which are suitable for these uses.

FIG. 2A

**Description**

The present invention relates to the use of lithium-containing garnets as solid ion conductors or as constituents of solid ion conductors. The present invention also relates to novel lithium-containing garnets, suitable for said use.

To boost the global current transformation to efficient low-emission transport and a sustainable energy economy new electrical energy storage solutions (EES) are needed to efficiently store electricity from intermittent solar, wind, or tidal sources and reduce the dependency on fossil fuels. Among EES advanced Li-ion battery technologies (LiBs) are the most promising solutions, due to their high energy density and high power density. Such LiBs are currently limited by the instability of liquid and even state-of-the-art solid electrolytes against Li metal and/or high voltage cathodes, which pose major safety and performance concerns.

The international goal to gradually replace the current fossil- and nuclear-based energy supply with renewable energy requires further advancements in research and development of next generation Li-ion battery technologies with higher energy and power density and improved safety, using abundant materials for low cost. On one hand, this complex shift in the energy infrastructure requires research strategies that cultivate an in-depth understanding of the underlying fundamental processes in electrochemical cells, which can be used to develop new conceptual electrochemical energy storage systems. On the other hand, it requires the development of batteries with new chemistry, which could offer higher energy density, better safety, use of abundant materials, lower cost, and operational flexibility at different temperatures and under various environmental conditions.

The realization of advanced battery technologies using new chemistry will reduce the dependency on polluting, inefficient coal plants by introducing a reliable way to use intermittent renewable energy. There is a strong potential for advanced Li-ion battery (LIB) storage solutions for a variety of power and energy storage requirements. As an example, in standalone household systems or as utility grid-connected assets, these batteries would allow for the storage of energy produced by solar panels for use even after the sun has gone down, thus reducing the energy price volatility. Implementation in future electrical vehicles facilitates the reduction of exhaust, particularly in congested centers, to counter the increasing amount of serious health issues from pollution exposure, which is associated with enormous health costs. Furthermore, the development of LIBs having improved properties can promote the wellbeing of an entire economic sector, including power suppliers, grid operators, battery manufacturers, energy storage integrators, solar developers, and energy-service companies, providing an opportunity for enhancing industrial competitiveness, a major enabler of future economic growth and job creation.

In order to realize advanced battery technologies the increase in battery voltage (the voltage difference between the cathode and the anode) is very advantageous to enable higher energy density (the battery voltage times the capacity applications without an increase in the cell weight or volume. Since Li metal has the highest theoretical capacity (3860 mAh g$^{-1}$) and the lowest electrochemical potential (3.04 V vs standard hydrogen electrode) for LIBs, it is the preferred anode material for both high-energy and power density batteries, especially when combined with high voltage Li-containing cathodes (*e.g.*, $LiNi_{0.8}Mn_{0.1}Co_{0.1}O_2$, $LiNi_{0.5}Mn_{1.5}O_4$) or non-Li containing cathodes (*e.g.*, sulfur and air/$O_2$). Currently, liquid electrolytes limit battery voltages to approximately 4.3 V. Above 4.3 V the liquid electrolytes start to dissociate. Additionally, on the anode side, Li dendrite formation has been the main challenge for decades. These dendrites pose major safety and electrochemical performance concerns.

The current research bottleneck can be relieved when good solid-state electrolytes become available. They have the potential to pave the way towards all solid-state Li-ion batteries, which are projected to be able to achieve gravimetric and volumetric energy densities of about 500 kWh/kg and 1000 kWh/l, respectively. Such high values would enable the realization of electric vehicles (EV) with a range of 700 km in a single charge, which is an increase of more than 100 % to the current best. Although several solid electrolytes have been reported and are currently studied, such as Li-oxide garnets or NASICON-based materials (Na super ionic conductor), they appear to be only kinetically stable (Zhu et al., 2015, Origin of outstanding stability in the lithium solid electrolyte materials: Insights from thermodynamic analyses based on first-principles calculations, ACS Appl. Mater. Inter. 7: 23685 - 23693). Furthermore, these known solid electrolytes usually need high temperatures for synthesis and, therefore, are expensive to process. A decrease in the battery price below $100 per kWh is needed to allow EVs to become competitive with combustion engines (*e.g.*, today, Tesla's Model 3 battery pack costs $190 per kWh, and the General Motors' 2017 Chevrolet Bolt battery pack is estimated to cost about $205 per kWh). Solid ion conductors based on Li-oxide garnets have been described earlier, for example in EP 2 176 190 A1, US 2015/0118571 A1, and US 2014/0193695 A1.

It is an object of the present invention to overcome the current limitations of known Li-ion based solid ion conductors and to provide novel Li-ion based solid ion conductors having high Li-ion conductivities and a high electrochemical stability and which can be produced at low cost.

It is a further object of the present invention to realize improved Li-ion based energy systems which are urgently needed to efficiently store electricity from solar, wind, or tidal sources and, thus, to ultimately cut the worldwide dependencies on fossil fuels.

These objects are met by the present invention, which, in a first aspect, relates to a lithium-containing fluoride having a garnet crystal structure and having the stoichiometric composition of the general formula:

$$\{Na_{3-a}M'_a\}[M''_bM'''_c](Li_{3+c})F_{12-d}A_d$$

wherein

M' = Li⁺, K⁺ and/or Ag⁺
M" = $Al^{3+}$, $Ga^{3+}$, $In^{3+}$, $Sc^{3+}$ and/or $Y^{3+}$, wherein M" is optionally partially substituted with $X_e$, with X = $Ti^{3+}$, $V^{3+}$, $Mn^{3+}$, $Fe^{3+}$, $Cu^{3+}$, $Zn^{3+}$, $Ni^{3+}$ and/or $Co^{3+}$, and e < 1
M'" = $Mg^{2+}$, $Cu^{2+}$, $Ca^{2+}$, and/or $Zn^{2+}$
A = Cl⁻, Br⁻, and/or I⁻

$$a = 0 - 3$$

$$b = 0 - 2$$

$$0 < c \leq 2$$

$$b + c = 2$$

$$d = 0 - 1$$

wherein $(Li_{3+c})$ is optionally partially substituted with $Z_h$, with Z = $Na^+$, $K^+$, $Rb^+$, $Cs^+$, $Ag^+$, $B^{3+}$, $Al^{3+}$, $Ga^{3+}$, $In^{3+}$, $Si^{4+}$, and/or $Ge^{4+}$, and h < 0.2, and
wherein the anions are optionally partially replaced by a vacancy VAf, with f = 0 - 1 and/or the cations are optionally partially replaced by a vacancy $VC_g$, with g = 0 - 1.

Furthermore, in another aspect, the present invention also relates to the use of a lithium-containing fluoride having a garnet crystal structure and having the stoichiometric composition of the general formula:

$$\{Na_{3-a}M'_a\}[M''_bM'''_c](Li_{3+c})F_{12-d}A_d$$

wherein

M' = Li⁺, K⁺ and/or Ag⁺
M" = $Al^{3+}$, $Ga^{3+}$, $In^{3+}$, $Sc^{3+}$ and/or $Y^{3+}$, wherein M" is optionally partially substituted with $X_e$, with X = $Ti^{3+}$, $V^{3+}$, $Cr^{3+}$, $Mn^{3+}$, $Fe^{3+}$, $Cu^{3+}$, $Zn^{3+}$, $Ni^{3+}$ and/or $Co^{3+}$, and e < 1
M'" = $Mg^{2+}$, $Ca^{2+}$, $Cu^{2+}$ and/or $Zn^{2+}$
A = Cl⁻, Br⁻, and/or I⁻

$$a = 0 - 3$$

$$b = 0 - 2$$

$$c = 0 - 2$$

$$b + c = 2$$

$$d = 0 - 1$$

wherein (Li$_{3+c}$) is optionally partially substituted with Z$_h$, with Z = Na$^+$, K$^+$, Rb$^+$, Cs$^+$, Ag$^+$, B$^{3+}$, Al$^{3+}$, Ga$^{3+}$, In$^{3+}$, Si$^{4+}$, and/or Ge$^{4+}$, and h < 0.2,

wherein the anions are optionally partially replaced by a vacancy VAf, with f = 0 - 1 and/or the cations are optionally partially replaced by a vacancy VC$_g$, with g = 0 - 1,

as a solid ion conductor or as a constituent of a solid ion conductor, and with the proviso that the use of {Na$_3$}[Al$_2$](Li$_3$)F$_{12}$ as a conducting salt comprised in a liquid electrolyte of an electrochemical storage and/or conversion device is excluded.

Accordingly, the present invention relates to lithium-containing fluorides based on cryolithionite. Cryolithionite, with the formula Na$_3$Al$_2$Li$_3$F$_{12}$, is a unique natural mineral of the fluoride garnet group that occurs in hydrothermal deposits associated with minerals of other alumino-fluorides (*e.g.*, Ivigtut, Greenland). In the Li-fluoride garnet structure, the F- is located at general crystallographic positions 96*h* (located at the corners of the polyhedra), which forms an F- framework with interstices occupied by Na$^+$ at the eight-fold coordinated 24*c* position (A-site), by Al$^{3+}$ at the six-fold coordinated 16*a* position (B-site) and by Li$^+$ at the four-fold coordinated 24*d* position (C-site). Like oxide garnets, also cryolithionite is remarkably chemically flexible. Furthermore, cryolithionite has an extremely high stability window above 7 V (see Example 3 below in the experimental chapter). Moreover, it shows high Li-ion conductivities comparable to Li-oxide garnets (see Example 4 below in the experimental chapter). Surprisingly and to the inventor's best knowledge, cryolithionite has not yet received any attention with regard to a use as a solid ion conductor or as a constituent of a solid ion conductor in Li-ion battery applications.

The lithium fluoride garnets according to the present invention, which are based on cryolithionite, fulfill all the requirements to be used in advanced Li-ion battery technologies. The chemical flexibility of the fluoride garnets enables the tuning of the Li-ion conductivity by more than ten orders of magnitude by simply increasing the nominal Li content in the garnet formula. For example, the trivalent B-site Al$^{3+}$ in cryolithionite can be substituted by elements of the same group (e.g. Ga, In) or by a divalent cation to partially fill the interstitial sites in the garnet structure with extra lithium. For example, an increase in the Li-ion conductivity may also be achieved by a sub-valent substitution of the trivalent B-site Al$^{3+}$ with Ca$^{2+}$ and Li$^+$. Like cryolithionite, also the cyrolithionite-based lithium fluoride garnets according to the present invention possess a high stability window of above 7V. They may be used as a solid electrolyte or protecting layer for Li-metal anodes and high voltage cathodes to prevent dendrite formation and chemical, as well as electrochemical, degradation at both the cathode and anode interfaces needed to avoid battery failure scenarios. Thus, the unique combination of high Li-ion conductivity and high thermodynamic stability of the lithium fluoride garnets according to the present invention provides solid electrolytes having superior properties in comparison to those known in the art.

A further advantage of the lithium fluoride garnets according to the present invention is the possibility to synthesize them at room temperature by simple and reproducible precipitation reactions. In contrast to conventional synthesis routes that include several high temperature sintering steps, the lithium fluoride garnets according to the present invention may be prepared at a very low cost and without Li-loss. The garnets of the present invention, hence, may be used as ultra-low cost components for future battery technologies. This economic factor is particularly important in order to drop the battery price per kWh to make batteries competitive with combustion engines in automotive applications.

In certain embodiments of the lithium-containing fluorides described herein, the anions may be partially replaced by a vacancy VA$_f$, with f = 0 - 1 and/or the cations may be partially replaced by a vacancy VC$_g$, with g = 0 - 1. In certain embodiments of the lithium-containing fluorides described herein, (Li$_{3+c}$) at the C-site may be partially substituted with Z$_h$, with Z = Na$^+$, K$^+$, Rb$^+$, Cs$^+$, Ag$^+$, B$^{3+}$, Al$^{3+}$, Ga$^{3+}$, In$^{3+}$, Si$^{4+}$, and/or Ge$^{4+}$, and h < 0.2. It is clear to those skilled in the art that the partial replacement of the cations and/or anions by a vacancy or the partial substitution of (Li$_{3+c}$) with another cation may require a charge compensation. For example, when In$^{3+}$ is partially substituted in Na$_3$In$_2$Li$_3$F$_{12}$ by 0.1 Ca$^{2+}$ per formula unit (pfu) additional 0.1 Li pfu has to be added to achieve charge neutrality. In case of vacancy formation of 0.2 pfu in the fluorine-anion lattice of Na$_3$In$_{1.9}$Ca$_{0.1}$Li$_{3.1}$F$_{12}$ additional 0.2 Li pfu has to be added (Na$_3$In$_{1.9}$Ca$_{0.1}$Li$_{3.3}$F$_{1.8}$VA$_{0.2}$).

In certain embodiments of the invention, a = 0 and d = 0. Thus, A is not present in the fluoride garnet structure und the A-site is only occupied by Na$^+$ which is available in any quantity at considerable low costs.

In preferable embodiments of the invention, M" = Ga$^{3+}$ or In$^{3+}$. Since larger cations, i.e. Ga$^{3+}$ or In$^{3+}$, are present in the lattice, the lattice parameters become larger, resulting in a further increase in the conductivity. According to the Goldschmidt's rule the cations can be fully substituted by cations with similar ionic radii and by cations with charges differing less than one charge. In order to crystal chemically engineer the polyhedral volume of the B site to fit for the proposed divalent cations (Mg$^{2+}$ ($r^{VI}$ = 0.86 Å), Cu$^{2+}$($r^{VI}$ = 0.87 Å), Zn$^{2+}$ ($r^{VI}$ = 0.885 Å)), Al$^{3+}$ ($r^{VI}$ = 0.67 Å) is gradually substituted or fully exchanged by the larger Ga$^{3+}$ ($r^{VI}$ = 0.76 Å) or In$^{3+}$ ($r^{VI}$ = 0.93 Å) (Radii $r^{VI}$ taken from literature: R. D. Shannon, Revised effective ionic radii and systematic studies of interatomic distances in halides and chalcogenides:

Acta Crystallogr. A32 (1976) 751-757).

In preferable embodiments of the invention, M''' = $Mg^{2+}$ or $Ca^{2+}$.

Preferable examples of lithium-containing fluorides according to the present invention have a stoichiometric composition which is selected from the group consisting of $\{Na_3\}[Mg_2](Li_5)F_{12}$, $\{Na_3\}[Ca_2](Li_5)F_{12}$, $\{Na_3\}[InMg](Li_4)F_{12}$, $\{Na_3\}[InCa](Li_4)F_{12}$, $\{Na_3\}[Mg_2](Li_5)F_{11}Cl$, $\{Na_3\}[Ca_2](Li_5)F_{11}Cl$. The increase of the Li content in the crystal lattice by the substitution leads to high ion conductivities. Another increase is achieved by anion substitution, because $Cl^-$ is greater than $F^-$; thus, substituting $F^-$ with $Cl^-$ leads to lattice expansion and consequently to an increase in the ion conductivity. It is found for Li-oxide garnets that a lattice parameter of about 12.90-12.95 is the optimum to achieve high Li-ion conductivities (Zeier W., Structural limitations for optimizing garnet-type solid electrolytes: a perspective, Dalton Trans. (2014), 43:16133 - 16138).

In certain embodiments, the lithium-containing fluoride which is used as a solid ion conductor or as a constituent of a solid ion conductor, has a stoichiometric composition of formula $\{Na_3\}[M''_2](Li_3)F_{12}$.

Preferably, the lithium-containing fluoride has a stoichiometric composition selected from the group consisting of $\{Na_3\}[Al_2](Li_3)F_{12}$, $\{Na_3\}[Ga_2](Li_3)F_{12}$, $\{Na_3\}[In_2](Li_3)F_{12}$

In certain embodiments, the lithium-containing fluoride may further comprise at least one anion dopant selected from the group consisting of $O^{2-}$, $N^{3-}$ and/or $S^2$, replacing the anions in the crystal lattice of the garnet in an amount of up to 10%. Representative examples of lithium-containing fluorides comprising an anion dopant are $\{Na_3\}[InMg](Li_5)F_{11}O$, $\{Na_3\}[InCa](Li_5)F_{11}O$, and $\{Na_3\}[Ca_2](Li_6)F_{11}O$.

In contrast to the Li-ion based solid ion conductors known in the art, the lithium-containing fluorides according to the invention have both a high Li-ion conductivity and a high electrochemical stability. Because of these reasons, the lithium-containing fluorides according to the invention are particularly useful as solid ion conductors or as constituents of a solid ion conductor.

In specific embodiments, the lithium-containing fluorides described herein are valuable solid electrolytes that can be used in a broad range of energy-related applications and devices, in particular, in electrochemical storage and/or conversion devices, sensors, thermoelectric converters and/or electrochromic devices.

Accordingly, a further aspect of the present invention relates to electrochemical storage and/or conversion device comprising a lithium-containing fluoride having a garnet crystal structure as described herein, with the proviso that the electrochemical storage and/or conversion device does not include $\{Na_3\}[Al_2](Li_3)F_{12}$ in the form of a conducting salt in a liquid electrolyte.

The electrochemical storage and/or conversion device is preferably selected from the group consisting of a battery, an accumulator, a supercapacitor (supercap) and a fuel cell.

As mentioned above, the lithium-containing fluorides of the invention may be used as solid ion conductors in sensors; for example, as solid ion conductors in $CO_2$ sensors, e.g. for use as solid ion conductors in $CO_2$ sensors as described by Struzik et al (Struzik et al, A Simple and Fast Electrochemical CO2 Sensor based on Li7La3Zr2O12 for Environmental Monitoring, Advanced Materials (2018), Volume 40, Issue 44; 1804098).

Electrochromic devices as mentioned above are, for example, windows, exterior walls, and Visual Display Units (VDUs).

The lithium-containing fluorides described herein can also be used for fabrication of a thin-film all solid-state micro-battery. Micro-batteries are particularly attractive as on-chip energy supply for powering portable units where information is measured, exchanged, or stored at high volumetric densities. The benefit of using solid-state materials based on the present invention is the possibility to prepare thin-film structures with less than 1 $\mu$m thickness. This significantly decreases the Li-ion diffusion pathway and increases the packing density of the micro-battery units when compared to liquid or polymer based micro-batteries. In addition, all solid-state batteries can take full advantage of current silicon wafer processing methods for complete integration into micro-electro-mechanical system technologies. In preferable embodiments, the lithium-containing fluorides are used in these micro-batteries as solid electrolyte, or an ion conducting protective layer for Li metal or high voltage cathodes, or an ion conducting interlayer.

The preparation of thin films based on said lithium-containing fluorides has the advantage that their Li-ion conductivity for the use in an all solid-state battery does not need to be as high as compared to bulk solid electrolytes, taking into account the total electrolyte resistance $R_t = l \cdot (\sigma_t \cdot A)^{-1}$, where A is the contact area, l is the thickness, and $\sigma_t$ is the total Li-ion conductivity of the solid electrolyte. As an example, in the study Liu et al. (Liu et al, Achieving high capacity in bulk-type solid-state lithium ion battery based on Li6.75La3Zr1.75Ta0.25O12 electrolyte: Interfacial resistance: J. Power Sources 324 (2016) 349-357), a functioning bulk all solid-state battery using cubic LLZO as a solid electrolyte with ~1 mm thickness and a $\sigma_t$ of ~$10^{-4}$ S $\cdot$cm$^{-1}$ is reported. In comparison, under similar conditions and considering the same resistance, an all solid-state battery based on the lithium-containing fluorides of the invention can be operated using a solid electrolyte thin film with only ~1 $\mu$m thickness and a $\sigma_t$ of ~$7 \cdot 10^{-7}$ S cm$^{-1}$. Consequently, in case of thin films the Li-ion conductivity of Cryolithionite-based lithium-containing fluorides as described herein with a thickness of about 100 $\mu$m is high enough to be used as an electrolyte in all solid-state batteries or for protecting Li-metal anodes. Taking advantage of the increased electrochemical window, the present invention is especially attractive for high current loads beyond 2 mA cm$^{-2}$ such as for fast charging in electric vehicles.

Thin films of lithium-containing fluorides as described herein can be prepared, e.g., by physical vapor deposition (PVD), radiofrequency magnetron sputtering (RFMS) and pulse laser deposition.

Furthermore, the preparation of Cryolithionite-based electrodes as thin films overcomes the drawback of F-based electrode materials having low electronic conductivities by providing short diffusion pathways for Li-ions during charge and discharge, which enables high power density devices. As mentioned above, the electrical conductivity can be also increased by substitution of the transition metal by a divalent cation. Moreover, Cryolithionite can be prepared without any heat treatment, which is a big advantage (low cost, no Li-loss) compared to other Li-containing solid electrolytes.

In a further aspect, the lithium-containing fluorides according to the present invention are used in the form of a protective layer before an electrode or in the form of a constituent of a protective layer before an electrode, in order to enhance the chemical stability of the electrode towards the electrolyte. A fluorine-based instead of an oxygen-based framework in the lithium-containing fluorides of the invention provides higher electrochemical stability with a large band gap of about 7 V. For example, the present invention is particularly attractive as a protective layer for Li metal in liquid-based battery systems, preventing passivation of Li metal and dendrite formation.

A further aspect of the present invention relates to an electrode comprising a lithium-containing fluoride as described herein, wherein the lithium-containing fluoride has a stoichiometric composition as defined herein. In preferred embodiments, the electrode is coated with the lithium-containing fluoride. The term "the electrode is coated with the lithium-containing fluoride" as used herein refers to a coating of the electrode's surface in the common sense, e.g. a thin-film layer deposited onto the electrode's surface by physical vapor deposition (PVD), as well as to core-shell-like structures that comprise or consist of the lithium-containing fluoride and cover/encase the electrode.

In a further aspect, the lithium-containing fluorides described herein may also be used an interlayer between other solid electrolytes and high voltage electrodes, thus, extending the chemical potential to match the potential between the electrolyte and electrode materials.

In another aspect, the lithium-containing fluorides of the present invention may be used as solid electrolytes which are mixed with the electrode material in order to enable a good ion conductivity and achieve smooth electrochemical reaction within the cell. The lithium-containing fluorides may be added to the composite electrode, for example, composed of three kinds of particles; e.g. particles of an active material ($LiCoO_2$), particles of a cryolithionite-based material according to the invention, and particles of a conductive additive (acetylene black) with a weight ratio of 20:30:3 are mixed in order to form continuous lithium ion and electron conducting paths to $LiCoO_2$.

To sum up, the high chemical stability and the low synthesis temperature of the lithium-containing fluorides can overcome issues with all solid-state batteries with cathodes such as $LiCoO_2$ (LCO), where passivating inter-diffusion layers currently formed during cell preparation cause high interfacial resistance.

A further aspect of the present invention relates to a process for preparing a lithium-containing fluoride having a garnet crystal structure as described herein, wherein the process is characterized in that precursor compounds, preferably salts, hydroxides and/or oxides, of components Na$^+$, M', M" and/or M'" are reacted with one another.

In a particularly, preferred embodiment, the reaction is carried out by means of a precipitation reaction of the dissolved precursor compounds of said components in the presence of hydrogen fluoride. The synthesis of the lithium-containing fluorides by means of a precipitation reaction has the advantages that there is no Li-loss and that no heat treatment is required, thus, keeping the production costs very low.

In other embodiments, the reaction is carried out by means of solid-state synthesis. Preferably, the precursor compounds are fluorides of said components.

In the following, in order to further demonstrate the present invention, illustrative and non-restrictive examples and embodiments, which are also illustrated in the accompanying Figures, are discussed.

BRIEF DESCRIPTION OF THE FIGURES

**FIGS. 1A, 1B and 1C** show three different battery types containing Cryolithionite-based solid electrolytes according to the present invention as solid electrolyte (FIG. 1C), as an ion conducting interlayer (FIG. 1B), or as an ion conducting protective layer (FIG. 1A) for Li metal or high voltage cathodes. Cat = cathode, An = anode, SE = solid electrolyte, IL = Interlayer, PL = protecting layer, LNMO = $LiNi_{0.5}Mn_{1.5}O_2$, NCA = $LiNi_{0.8}CO_{0.15}Al_{0.05}O_2$

**FIG. 2A** shows the electrochemical stability window of $Na_3Al_2Li_3F_{12}$ which was investigated via CV. An extremely high stability window of 10 V - even exceeding the theoretically predicted thermodynamic stability window of 7.1 V - is observed (may be related to kinetic stabilization).

**FIG. 2B** shows the electrochemical stability window of $Na_3In_{1.9}Ca_{0.1}Li_{3.1}F_{12}$ which was investigated via CV. An extremely high stability window of 10 V - even exceeding the theoretically predicted thermodynamic stability window of 7.1 V - is observed (may be related to kinetic stabilization).

**FIG. 3A** shows the Arrhenius behaviour of the total Li-ion conductivity of Cryolithionite in comparison with Li-oxide garnets from literature. A huge increase in the Li-ion mobility in the order of 10 - 12 magnitudes is observed after the incorporation of extra lithium into the garnet structure.

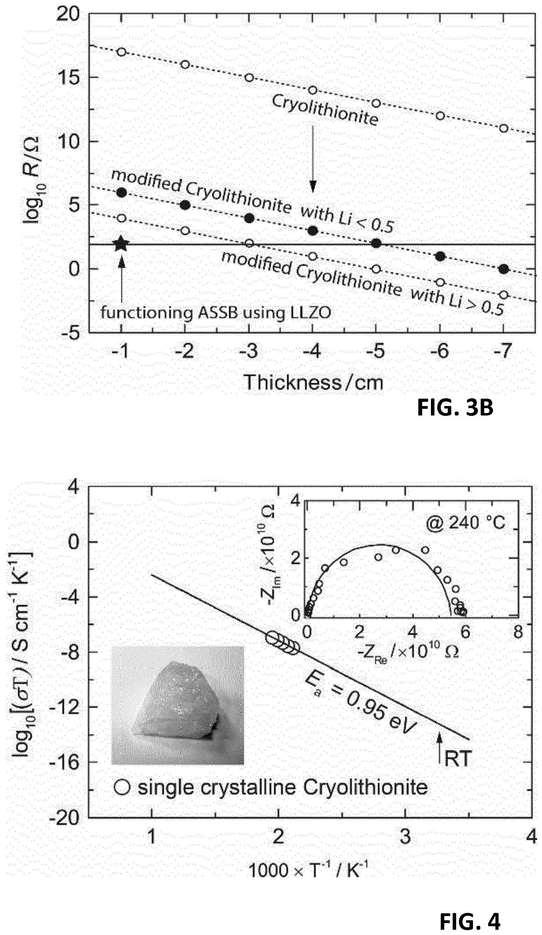

**FIG. 3B** shows the total effective resistance of Cryolithionite as a function of the solid electrolyte thickness. ★ represents a functioning bulk all solid-state battery using cubic $Li_7La_3Zr_2O_{12}$ as solid electrolyte with about 1 mm thickness and a Li-ion conductivity of about $10^{-4}$ S cm$^{-1}$ (Liu et al, Achieving high capacity in bulk-type solid-state lithium ion battery based on Li6.75La3Zr1.75Ta0.25O12 electrolyte: Interfacial resistance, J. Power Sources, (2016), 324:349-357). This suggests a film thickness of about 100 $\mu$m with a Li-ion conductivity of only about $10^{-7}$ S cm$^{-1}$, which thickness is already thin enough to use Cryolithionite-based electrolytes in a Li-ion battery device.

**FIG. 4** shows an Arrhenius plot of natural abundant single crystalline $Na_3Al_2Li_3F_{12}$. A representative Nyquist plot taken at 240 °C is shown in the inset.

**FIG. 5** shows a representative Nyquist plot of $Na_3In_2Li_3F_{12}$ and $Na_3In_{1.9}Ca_{0.1}Li_{3.1}F_{12}$ taken at 23 °C.

**FIG. 6** shows the XRD pattern of calculated and synthesized $Na_3Al_2Li_3F_{12}$, as well as for calculated $Na_3In_2Li_3F_{12}$, and synthesized $Na_3In_2Li_3F_{12}$ and $Na_3In_{1.9}Ca_{0.1}Li_{3.1}F_{12}$.

**FIG. 7** shows a scanning electron microscopy photo of $Na_3In_{1.9}Mg_{0.1}Li_{3.1}F_{12}$ using a backscattered electron detector. The white spots shown in FIG. 7 correspond to an unidentified oxygen-based extra phase. Spots of energy dispersive spectroscopy, EDS, measurements are highlighted (Spectrum 1-8).

DESCRIPTION of EMBODIMENTS and EXAMPLES

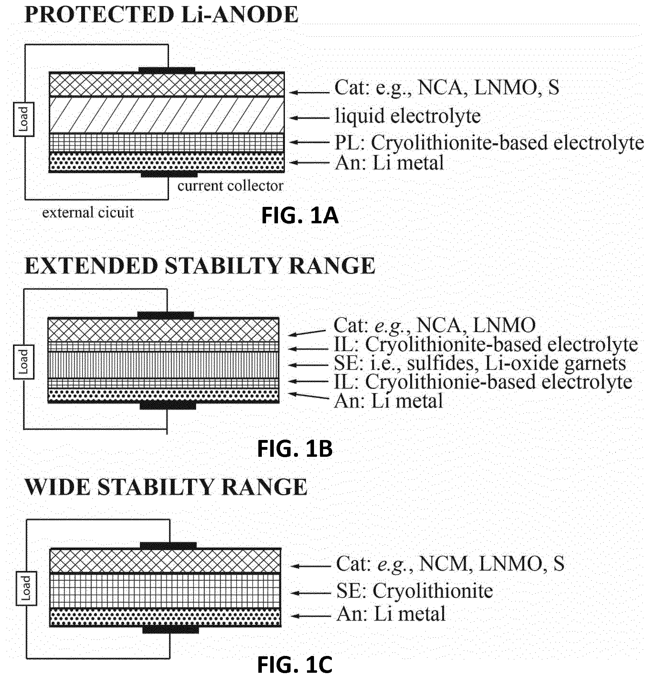

**FIG. 1A, 1B, and 1C** show three different battery types containing cryolithionite-based lithium-containing fluorides according to the present invention as solid electrolyte, wherein Cat = cathode, An = anode, SE = solid electrolyte, IL = Interlayer, PL = protecting layer, LNMO = $LiNi_{0.5}Mn_{1.5}O_2$, LTO = $Li_4Ti_5O_{12}$, NCA = $LiNi_{0.8}Co_{0.15}Al_{0.05}O_2$. FIG. 1A, 1B, and 1C describe a protected active metal, but also alloy or intercalation electrode that enables very high energy density lithium batteries such as those using aqueous electrolytes or other electrolytes that would otherwise adversely react with lithium metal. Examples of such high energy battery couples are lithium-air, lithium-water, lithium-metal hydride, lithium-metal oxide, and the lithium alloy and lithium-ion variants of the aforementioned.
**FIG. 1A** describes, as an exemplary embodiment, the use of a non-aqueous electrolyte interlayer architecture to isolate an active metal (e.g., alkali metal, such as lithium), but also active metal alloy or active metal-ion electrode (usually the anode of a battery cell). Isolation of the anode from other components of a battery cell or other electrochemical cell by a protective layer (PL) made of a cryolithionite-based solid electrolyte according to the invention allows the use of virtually any solvent, electrolyte and/or cathode material in conjunction with the anode. Also, optimization of electrolytes or cathode-side solvent systems may be achieved without impacting anode stability or performance.
**FIG. 1B** shows, as an exemplary embodiment, that the use of a cryolithionite-based solid electrolyte according to the invention as interlayer (IL) architecture effectively isolates (decouples) the anode as well as the cathode from a solid electrolyte (e.g. $Li_{10}GeP_2S_{12}$ [Kamaya N. et al, A lithium superionic conductor: Nat. Mater., (2011), 10:682-686]) with higher Li-ion conductivity but lower electrochemical stability against metallic Li and high voltage cathodes.
**FIG. 1C** shows, as an exemplary embodiment, a Li-metal battery using a cryolithionite-based solid electrolyte according to the invention to de-couple the Li-metal anode and the high voltage cathode.

**Example 1: Liquid-based synthesis of lithium-containing fluorides according to the invention**

Lithium-containing fluorides having a stoichiometric composition as defined in the present disclosure are prepared by precipitation from aqueous solution. Precursor compounds, preferably salts, hydroxides and/or oxides, of components $Na^+$, M', M" and/or M"' are first dissolved in distilled water. Afterwards a 5 % HF solution (in methanol) is added for the precipitation of the lithium-containing fluorides having a garnet crystal structure.

Liquid based synthesis of $Na_3Al_2Li_3F_{12}$ (Cryolithionite)

$Na_3Al_2Li_3F_{12}$ was synthesized using 10 ml of NaOH, and stoichiometric amounts of LiOH and $NaAlO_2$. During stirring a participation was formed, which was then dissolved by adding HCl until a pH value of 2 was achieved. To the solution 10 ml of 5 % HF (1:10 in methanol) was added. The fluoride garnet then participated over night and was purified by washing with methanol 3 times. To check if the synthesis was successful X-ray powder diffraction measurements were carried out using a Bruker D8 Advance diffractometer operating with $CuK\alpha$ radiation. Data were collected at angles $2\theta$ ranging from 10° to 110°.

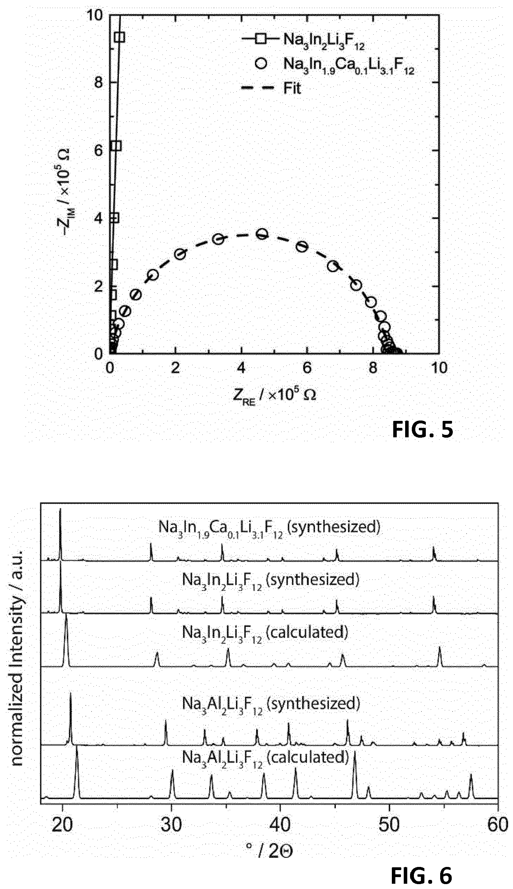

**FIG. 6** shows the XRD pattern of calculated and synthesized $Na_3Al_2Li_3F_{12}$ (by liquid based synthesis, Example 1), as well as for calculated $Na_3In_2Li_3F_{12}$, and synthesized $Na_3In_2Li_3F_{12}$ and $Na_3In_{1.9}Ca_{0.1}Li_{3.1}F_{12}$ (by solid state synthesis, see Example 2 below). The obtained powder pattern shown in **FIG. 6** clearly indicates the successful synthesis of Cryolithionite by liquid based synthesis. A calculated pattern is shown for comparison. Only some small reflexions can be observed, which does not belong to the cubic garnet structure, indicating a minor extra phases. Those reflexions are not possible to assign to a phases, due to the lack of intensity.

**Example 2: Solid state synthesis of lithium-containing fluorides according to the invention**

Solid state synthesis of lithium containing fluorides having a stoichiometric composition as defined in the present disclosure is performed by reacting precursor compounds in form of fluorides of components $Na^+$, M', M" and/or M'''. The precursor compounds in form of fluorides are mixed, pressed to pellets and then put into a copper tube. The copper tube is then put into an oven under argon atmosphere to prevent oxidation of the copper. The copper tube is then heated up with a heating rate between 5 and 10 °C/min to a temperature, preferably in a range of between 600 °C and 800 °C for a predefined dwelling time, preferably for 12 - 24 hours.

Solid-state based synthesis of $Na_3Al_2Li_3F_{12}$

Solid-state synthesis of $Na_3Al_2Li_3F_{12}$ was done with stoichiometric amounts of NaF, LiF and $AlF_3$. The substances were mixed, pressed and the pellet was put into a cooper tube, which was sealed under argon (to exclude any oxygen). The copper tube was then heated up to 700° C for 17 hours.

Solid-state based synthesis of $Na_3In_2Li_3F_{12}$

Solid-state synthesis of $Na_3In_2Li_3F_{12}$ was done with stoichiometric amounts of NaF, LiF and $InF_3$. The substances were mixed, pressed to pellets an put into a cooper tube, which was sealed under argon (to exclude any oxygen). The copper tube was then heated up to 600° C with a heating rate of 5 °C/min for 16 hours.

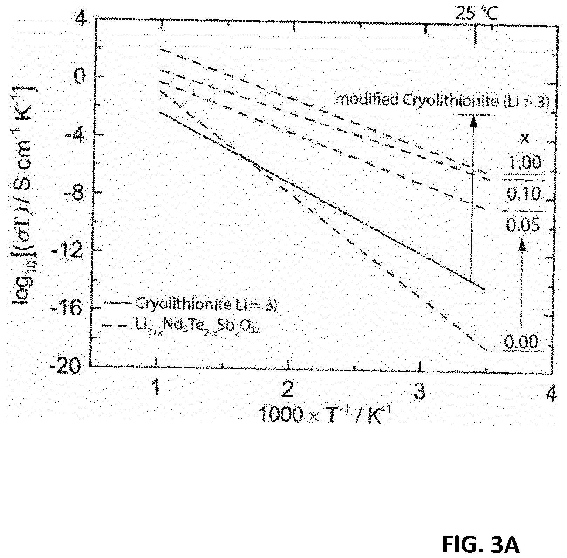

For example, the substitution of In by Ca (see solid-state based synthesis of $Na_3In_{1.9}Ca_{0.1}Li_{3.1}F_{12}$ below) will lead to an strong increased in the Li-ion conductivities of about 10 orders of magnitude (see **FIG. 3A** of Example 4 below) similar as observed by O'Callaghan et al for Li-oxide garnets [O'Callaghan et al, Switching on Fast Lithium Ion Conductivity in Garnets: The Structure and Transport Properties of Li3+xNd3Te2-xSbxO12: Chem. Mater. 20 (2008) 2360.]

Solid-state based synthesis of $Na_3In_{1.9}Ca_{0.1}Li_{3.1}F_{12}$

Solid-state synthesis of $Na_3In_{1.9}$ $Ca_{0.1}Li_{3.1}F_{12}$ was done with stoichiometric amounts of NaF, LiF, $InF_3$, and $CaF_2$. The substances were mixed, pressed and the pellet was put into a cooper tube, which was sealed under argon (to exclude any oxygen). The copper tube was then heated up to 600°, with a heating rate of 5 °C/min for 17 hours.

The powder XRD pattern for both $Na_3In_2Li_3F_{12}$ and $Na_3In_{1.9}Ca_{0.1}Li_{3.1}F_{12}$ are shown in **FIG. 6** in comparison with the calculated pattern of $Na_3In_2Li_2F_{12}$. Those patterns look similar to the reference indicating the success of the synthesis and phase purity. Only some small amounts of extra unidentified oxide-based phases, most probably caused by oxide-impurities within the starting materials, are present, which are identical in the modified and non-modified cryolithionite but cannot be assigned to a known phases due to the low intensity of those reflexions. Nevertheless, since no additional reflexions occur after the substitution of In by Ca we conclude the successful incorporation of Ca into the garnet structure.

Further evidence is given that the substitution of In by Ca leads to a conductivity increase of more than 10 orders of magnitude to a value of $10^{-5}$ S $cm^{-1}$ (see Example 4)

Solid-state based synthesis of $Na_3In_{1.9}Mg_{0.1}Li_{3.1}F_{12}$

Solid-state synthesis of $Na_3In_{1.9}$ $Mg_{0.1}Li_{3.1}F_{12}$ was done with stoichiometric amounts of NaF, LiF and $InF_3$. The

substances were mixed, pressed and the pellet was put into a cooper tube, which was sealed under argon (to exclude any oxygen). The copper tube was then heated up to 600°, with a heating rate of 5 °C/min for 17 hours.

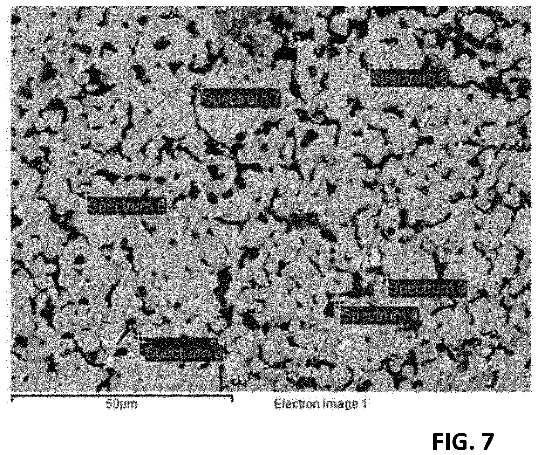

Scanning electron microscopy, SEM, analysis was made using a Zeiss Ultra Plus device. Small polycrystalline chips, taken from the larger pellets, were embedded in an epoxy holder and the surface was ground and then polished with successively finer abrasive papers, culminating in a final polish with abrasive paper with a grid size of 4000. In **FIG. 7** a SEM picture using a back scattered electron detector of the polished pellet of $Na_3In_{1.9}Mg_{0.1}Li_{3.1}F_{12}$ is shown. EDS measurements were undertaken to characterize the synthetic product $Na_3In_{1.9}Mg_{0.1}Li_{3.1}F_{12}$ in terms of its composition and in particular if the dopant elements, in this case Mg, is incorporated into the fluoride-based garnet structure. The obtained normalized values of F, In, Na, and Mg given in Table 1 below were used to qualitatively calculate the composition of $Na_3In_{1.9}Mg_{0.1}Li_{3.1}F_{12}$. Since Li can only hardly measured by X-rays the obtained values for Na, In, Mg are normalized to Na = 3. This results in an average ratio between Na, In, and Mg of 3, 0.09(1), and 1.98(1), respectively, clearly indicating the successful incorporation of Mg into the $Na_3In_{1.9}Mg_{0.1}Li_{3.1}F_{12}$-structure. The white spots shown in **FIG. 7** correspond to an unidentified oxygen-based extra phase. This phase occurs due to some oxide impurities in the starting materials and explains the presents of minor extra phases as observed in the X-ray powder diffraction pattern as observed, for example, in **FIG. 6**.

*Table 1:* EDS results (in weight-%) of $Na_3In_{1.9}Mg_{0.1}Li_{3.1}F_{12}$

| Spectrum | F | Na | Mg | In | Total |
|---|---|---|---|---|---|
| Spectrum 1 | 53.10 | 10.72 | 0.41 | 35.77 | 100.00 |
| Spectrum 2 | 52.65 | 10.88 | 0.68 | 35.78 | 100.00 |
| Spectrum 3 | 52.26 | 11.85 | 0.15 | 35.74 | 100.00 |
| Spectrum 4 | 52.49 | 10.66 | 0.21 | 36.64 | 100.00 |
| Spectrum 5 | 52.84 | 10.75 | 0.20 | 36.21 | 100.00 |
| Spectrum 6 | 52.94 | 10.47 | 0.26 | 36.32 | 100.00 |
| Spectrum 7 | 52.53 | 11.21 | 0.45 | 35.82 | 100.00 |
| Spectrum 8 | 52.08 | 11.33 | 0.42 | 36.17 | 100.00 |
| Mean | 52.61 | 10.98 | 0.35 | 36.06 | 100.00 |
| Std. deviation | 0.34 | 0.45 | 0.18 | 0.33 | |
| Max. | 53.10 | 11.85 | 0.68 | 36.64 | |
| Min. | 52.08 | 10.47 | 0.15 | 35.74 | |

**Example 3: Investigation of the electrochemical stability window of $Na_3Al_2Li_3F_{12}$, and $Na_3In_{1.9}Ca_{0.1}Li_{3.1}F_{12}$**

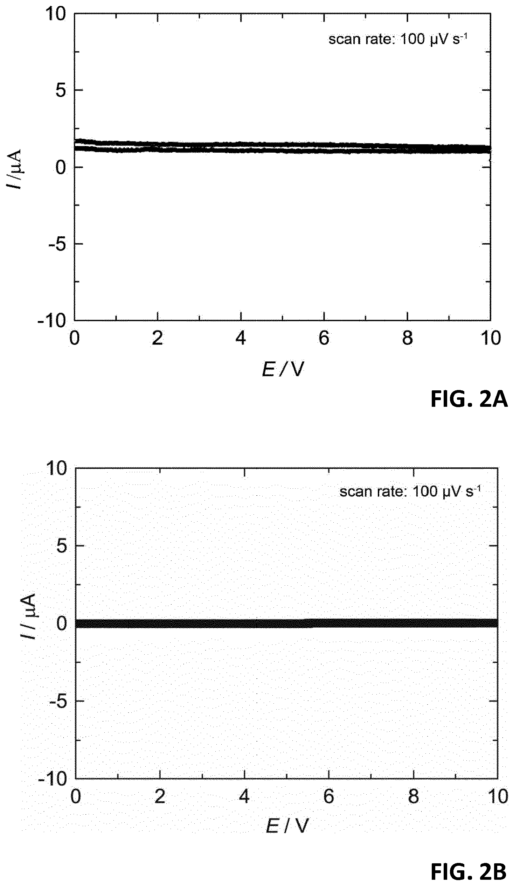

Cyclic voltammetry (CV) measurements were performed using a Li/Cryolithionite/Au configuration to assess the electrochemical window of garnet pellets. The 100 nm Au blocking electrode was sputtered on one surface of the garnet pellet, and the reversible Li electrode was applied on the other side of the pellet. The cell was scanned at a rate of 100 $\mu$V s$^{-1}$ in the potential range from 0 to 10 V vs Li/Li$^+$. In **FIG. 2A** the cyclic voltammogram of $Na_3Al_2Li_3F_{12}$ is shown. No peaks towards higher voltages are observed, indicating that Li$^+$ could pass through the garnet pellet without possible degradation reactions. During the anodic sweep of the CV experiment, the garnet was found to be stable up to 10 V, even exceeding the theoretically predicted thermodynamic stability window of 7.1 V - is observed (may related to kinetic stabilization). In **FIG. 2B** the cyclic voltammogram of $Na_3In_{1.9}Ca_{0.1}Li_{3.1}F_{12}$ is shown. No peaks towards higher voltages are observed, indicating that Li$^+$ could pass through the garnet pellet without possible degradation reactions. During the anodic sweep of the CV experiment, the garnet was found to be stable up to 10 V, even exceeding the theoretically predicted thermodynamic stability window of 7.1 V - is observed (may related to kinetic stabilization).

**Example 4: Investigation of the Li-ion conductivity of $Na_3Al_2Li_3F_{12}$ and $Na_3In_2Li_3F_{12}$**

To check the Li-ion conductivity of a single crystal (about 2 cm in diameter) received from the Natural History Museum, in Vienna, Austria (see inset of Fig. 4) the single crystal was investigated by microcontact impedance spectroscopy. Micro electrodes were applied to avoid contributions from extra phases (such as Cryolite). On top of the polished single crystals Pt thin films were sputter deposited with a thickness of 200 nm on top of approximately 10 nm Ti (used to improve the adhesion between the sample and the electrode). The patterning of the microelectrodes was performed by photolithography. Therefore, a negative photoresist was coated on top of the embedded and polished single crystals. After applying the mask with circular electrodes with a diameter of 0.2 mm the samples were exposed to UV light. Areas which were covered during exposure were removed using a developer solution (Microresist Technologies, Germany). In a subsequent step, the microstructure was produced by ion beam etching. All impedance measurements were performed between 200 and 400 °C in a tube furnace using an Alpha-A High Resolution dielectric analyzer with a ZG-2 interface (Novocontrol, Germany) in the frequency range from $3 \times 10^6$ Hz to $10^2$ Hz with a voltage amplitude of 100 mV. The temperature were measured using a thermocouple placed close to the single crystals. The temperature dependency of the Li-ion conductivity illustrated in **FIG. 4** is a typical Arrhenius plot representation. A representative Nyquist plot of the measurement at 240 °C is shown in the inset of **FIG. 4**. Since the measurements are performed on a single crystal (and based on the capacitance in the pF range typical for bulk processes), we conclude that the semicircle in the complex plane corresponds to the bulk Li-ion conductivity. Since the Li-ion conductivity is too low below 200 °C to be measurable by impedance spectroscopy the Li-ion conductivity was extrapolated to RT as shown in **FIG. 4**. The calculated bulk Li-ion conductivity at RT is $\sim 10^{-17}$ S cm$^{-1}$ with an activation energy of 0.95 eV.

Compared to a report about a functioning bulk all solid-state battery using 1 mm thick cubic $Li_7La_3Zr_2O_{12}$ as the solid electrolyte with a Li-ion conductivity of about $10^{-4}$ S cm$^{-1}$ (see Liu et al, Achieving high capacity in bulk-type solid-state lithium ion battery based on Li6.75La3Zr1.75Ta0.25O12 electrolyte: Interfacial resistance: J. Power Sources 324 (2016) 349-357), a film thickness of about 100 $\mu$m with a Li-ion conductivity of only about $10^{-7}$ S cm$^{-1}$ is already thin enough to use Cryolithionite and Cryolithinite-based fluorides according to the invention in a future Li-ion battery device (see **FIG. 3B**). **FIG. 3B** shows the total effective resistance of Cryolithionite as a function of the solid electrolyte thickness. ★ represents a functioning bulk all solid-state battery using cubic $Li_7La_3Zr_2O_{12}$ as solid electrolyte with about 1 mm thickness and a Li-ion conductivity of about $10^{-4}$ S cm$^{-1}$. This suggests a film thickness of about 100 $\mu$m with a Li-ion conductivity of only about $10^{-7}$ S cm$^{-1}$, which thickness is already thin enough to use Cryolithionite-based electrolytes in a Li-ion battery device.

To activate fast-ion diffusion in garnets, a nominal Li content larger than 3 formula units in the garnet formula is needed. This is demonstrated by O'Callaghan *et al.* by synthesizing the oxide-based $Li_{3+x}Nd_3Te_{2-x}Sb_xO_{12}$ garnets, with $x$ = 0.0 - 1.5, to study the relationship between Li-site occupation and Li-ion conductivity (O'Callaghan et al, Switching on Fast Lithium Ion Conductivity in Garnets: The Structure and Transport Properties of Li3+xNd3Te2-xSbxO12: Chem. Mater. 20 (2008) 2360.) They found a decrease in the activation energy from 1.22 eV to $\sim$0.67 eV and an increase in the Li-ion conductivity from 0.01 mS cm$^{-1}$ at 600 °C to 0.03 mS cm$^{-1}$ at 400 °C by increasing the amount of Li at the interstitials by only 0.05 Li per formula unit (pfu). The further increase of Li goes along with an increase in Li-ion conductivity up to 3 mS cm$^{-1}$ at 400 °C. Introducing small amounts of extra Li into Cryolithionite (0.05-0.10 formula units) will consequently lead to an increase in the Li-ion conductivity by 10-12 orders of magnitude, as illustrated in **FIG. 3A. FIG. 3A** shows the Arrhenius behaviour of the total Li-ion conductivity of Cryolithionite in comparison with Li-oxide garnets from literature. A huge increase in the Li-ion mobility in the order of 10 - 12 magnitudes is observed after the incorporation of extra lithium into the garnet structure.

To evaluate the impact of a Li content > 3 Cryolithionite with the formula $Na_3In_2Li_3F_{12}$ and $Na_3In_{1.9}Ca_{0.1}Li_{3.1}F_{12}$ were synthesized (see Example 2 above) and evaluated by impedance spectroscopy. For the impedance measurements sintered cylindrical pellets with 10 mm in diameter and 1 mm in thickness were used. Gold electrodes with a layer thickness of 100 nm on both sides of the pellet were applied with a Leica EM SCD 050 sputter device. Impedance spectra were recorded with a Novocontrol Concept 80 broadband dielectric spectrometer covering a frequency range from $\upsilon$ = 10 mHz to 10 MHz at 23 °C. Measurements were carried out under Ar atmosphere in a glovebox. **FIG. 5** shows a representative Nyquist plot of $Na_3In_2Li_3F_{12}$ and $Na_3In_{1.9}Ca_{0.1}Li_{3.1}F_{12}$ taken at 23 °C. A single semicircle was observed for the modified Cryolithionite, which can be fitted by a standard R-CPE element giving a Li-ion conductivity of $10^{-5}$ S cm$^{-1}$ at RT. In contrast pristine $Na_3In_2Li_3F_{12}$ garnet was not measureable, due to its isolating character at RT (see also for single crystalline $Na_3Al_2Li_3F_{12}$). Based on the capacitance in the pF range typical the semicircle in the complex plane can be assigned to the bulk Li-ion conductivity.

REFERENCES

Kamaya N. et al, A lithium superionic conductor: Nat. Mater., (2011), 10:682-686

Liu et al, Achieving high capacity in bulk-type solid-state lithium ion battery based on Li6.75La3Zr1.75Ta0.25O12 electrolyte: Interfacial resistance: J. Power Sources 324 (2016) 349-357

O'Callaghan et al, Switching on Fast Lithium Ion Conductivity in Garnets: The Structure and Transport Properties of Li3+xNd3Te2-xSbxO12: Chem. Mater. 20 (2008) 2360.

Redhammer, D. et al, A single crystal X-ray and powder neutron diffraction study on NASICON-type Li1+xAlxTi2-x(PO4)3 (0 ≤ x ≤ 0.5) crystals: Implications on ionic conductivity Solid State Sci. 60 (2016) 99-107.)

Shannon R.D., Revised effective ionic radii and systematic studies of interatomic distances in halides and chalcogenides: Acta Crystallogr. (1976) A32:751-757

Struzik et al, A Simple and Fast Electrochemical CO2 Sensor based on Li7La3Zr2O12 for Environmental Monitoring: Advanced Materials (2018), Volume 40, Issue 44,1804098

Zeier W., Structural limitations for optimizing garnet-type solid electrolytes: a perspective: Dalton Trans. (2014), 43:16133 -16138

Zhu et al., Origin of outstanding stability in the lithium solid electrolyte materials: Insights from thermodynamic analyses based on first-principles calculations, ACS Appl. Mater. (2015), Inter. 7: 23685 - 23693

**Claims**

1. A lithium-containing fluoride having a garnet crystal structure and having the stoichiometric composition of the general formula:

$$\{Na_{3-a}M'_a\}[M''_bM'''_c] (Li_{3+c})F_{12-d}A_d$$

wherein

M' = $Li^+$, $K^+$ and/or $Ag^+$
M" = $Al^{3+}$, $Ga^{3+}$, $In^{3+}$, $Sc^{3+}$ and/or $Y^{3+}$, wherein M" is optionally partially substituted with $X_e$, with X = $Ti^{3+}$, $V^{3+}$, $Mn^{3+}$, $Fe^{3+}$, $Cu^{3+}$, $Zn^{3+}$, $Ni^{3+}$ and/or $Co^{3+}$, and e < 1
M"' = $Mg^{2+}$, $Cu^{2+}$, $Ca^{2+}$, and/or $Zn^{2+}$
A = $Cl^-$, $Br^-$, and/or $I^-$

$$a = 0 - 3$$

$$b = 0 - 2$$

$$0 < c \leq 2$$

$$b + c = 2$$

$$d = 0 - 1$$

wherein ($Li_{3+c}$) is optionally partially substituted with $Z_h$, with Z = $Na^+$, $K^+$, $Rb^+$, $Cs^+$, $Ag^+$, $B^{3+}$, $Al^{3+}$, $Ga^{3+}$, $In^{3+}$, $Si^{4+}$, and/or $Ge^{4+}$, and h < 0.2,
wherein the anions are optionally partially replaced by a vacancy $VA_f$, with f = 0 - 1 and/or the cations are optionally partially replaced by a vacancy $VC_g$, with g = 0 - 1.

2. Use of a lithium-containing fluoride having a garnet crystal structure and having the stoichiometric composition of the general formula:

$$\{Na_{3-a}M'_a\}[M''_bM'''_c](Li_{3+c})F_{12-d}A_d$$

wherein

M' = Li$^+$, K$^+$ and/or Ag$^+$

M" = Al$^{3+}$, Ga$^{3+}$, In$^{3+}$, Sc$^{3+}$ and/or Y$^{3+}$, wherein M" is optionally partially substituted with X$_e$, with X = Ti$^{3+}$, V$^{3+}$, Cr$^{3+}$, Mn$^{3+}$, Fe$^{3+}$, Cu$^{3+}$, Zn$^{3+}$, Ni$^{3+}$ and/or Co$^{3+}$, and e < 1

M'" = Mg$^{2+}$, Ca$^{2+}$, Cu$^{2+}$ and/or Zn$^{2+}$

A = Cl$^-$, Br$^-$, and/or I$^-$

$$a = 0 - 3$$

$$b = 0 - 2$$

$$c = 0 - 2$$

$$b + c = 2$$

$$d = 0 - 1$$

wherein (Li$_{3+c}$) is optionally partially substituted with Z$_h$, with Z = Na$^+$, K$^+$, Rb$^+$, Cs$^+$, Ag$^+$, B$^{3+}$, Al$^{3+}$, Ga$^{3+}$, In$^{3+}$, Si$^{4+}$, and/or Ge$^{4+}$, and h < 0.2,

wherein the anions are optionally partially replaced by a vacancy VA$_f$, with f = 0 - 1 and/or the cations are optionally partially replaced by a vacancy VC$_g$, with g = 0 - 1,

as a solid ion conductor or as a constituent of a solid ion conductor, and with the proviso that the use of {Na$_3$}[Al$_2$](Li$_3$)F$_{12}$ as a conducting salt comprised in a liquid electrolyte of an electrochemical storage and/or conversion device is excluded.

3. The lithium-containing fluoride according to claim 1 or the use of a lithium-containing fluoride according to claim 2, wherein a = 0 and d = 0.

4. The lithium-containing fluoride according to any one of the preceding claims or the use of a lithium-containing fluoride according to any one of the preceding claims, wherein M" = Ga$^{3+}$ or In$^{3+}$.

5. The lithium-containing fluoride according to any one of the preceding claims or the use of a lithium-containing fluoride according to any one of the preceding claims, wherein M'" = Mg2$^+$.

6. The lithium-containing fluoride according to any one of the preceding claims or the use of a lithium-containing fluoride according to any one of the preceding claims, wherein the stoichiometric composition is selected from the group consisting of {Na$_3$}[Mg$_2$](Li$_5$)F$_{12}$, {Na$_3$}[Ca$_2$](Li$_5$)F$_{12}$, {Na$_3$}[InMg](Li$_4$)F$_{12}$, {Na$_3$}[InCa](Li$_4$)F$_{12}$, {Na$_3$}[Mg$_2$](Li$_5$)F$_{11}$Cl, {Na$_3$}[Ca$_2$](Li$_5$)F$_{11}$Cl.

7. The use according to claim 2, **characterized in that** the lithium-containing fluoride has a stoichiometric composition of formula {Na$_3$}[M"$_2$](Li$_3$)F$_{12}$.

8. The use according to claim 7, wherein the lithium-containing fluoride has a stoichiometric composition selected from the group consisting of Al$^{3+}$ {Na$_3$}[Al$_2$](Li$_3$)F$_{12}$, {Na$_3$}[Ga$_2$](Li$_3$)F$_{12}$, {Na$_3$}[In$_2$](Li$_3$)F$_{12}$

9. The lithium-containing fluoride according to any one of the preceding claims or the use of a lithium-containing fluoride according to any one of the preceding claims, further comprising at least one anion dopant selected from the group consisting of O$^{2-}$, N$^{3-}$ and/or S$^2$, replacing the anions in the crystal lattice of the garnet in an amount of up to 10%.

10. Use of a lithium-containing fluoride having a garnet crystal structure according to claim 1, as a solid ion conductor or as a constituent of a solid ion conductor.

11. The use of a lithium-containing fluoride having a garnet crystal structure according to any one of claims 2 - 9 or the use of a lithium-containing fluoride according to claim 10, in electrochemical storage and/or conversion devices, sensors, thermoelectric converters and/or electrochromic devices.

12. The use of a lithium-containing fluoride having a garnet crystal structure according to any one of claims 2 - 9 or the use of a lithium-containing fluoride according to claim 10, in the form of a protective layer before an electrode or in the form of a constituent of a protective layer before an electrode.

13. An electrode comprising a lithium-containing fluoride having a garnet crystal structure, wherein the lithium-containing fluoride has a stoichiometric composition as defined in any one of claims 2 - 9, wherein preferably the electrode is coated with the lithium-containing fluoride.

14. An electrochemical storage and/or conversion device comprising a lithium-containing fluoride having a garnet crystal structure, wherein the lithium-containing fluoride has a stoichiometric composition as defined in any one of claims 2 - 9, with the proviso that the electrochemical storage and/or conversion device does not include ${Na_3}[Al_2](Li_3)F_{12}$ in the form of a conducting salt in a liquid electrolyte.

15. The use according to claim 11 or the electrochemical storage and/or conversion device according to claim 14, wherein the electrochemical storage and/or conversion device is selected from the group consisting of a battery, an accumulator, a supercapacitor and a fuel cell.

16. A process for preparing a lithium-containing fluoride having a garnet crystal structure according to any one of claims 1 and 3 to 9, **characterized in that** precursor compounds, preferably salts, hydroxides and/or oxides, of components $Na^+$, M', M" and/or M'" are reacted with one another.

17. The process according to claim 16, **characterized in that** the reaction is carried out by means of a precipitations reaction of the dissolved precursor compounds of said components in the presence of hydrogen fluoride, or **in that** the reaction is carried out by means of solid-state synthesis.

18. The process of claim 17, **characterized in that** the reaction is carried out by means of solid-state synthesis and the precursor compounds are fluorides of said components.

## PROTECTED Li-ANODE

Cat: e.g., NCA, LNMO, S
liquid electrolyte
PL: Cryolithionite-based electrolyte
An: Li metal

current collector

external cicuit

**FIG. 1A**

## EXTENDED STABILTY RANGE

Cat: *e.g.*, NCA, LNMO
IL: Cryolithionite-based electrolyte
SE: i.e., sulfides, Li-oxide garnets
IL: Cryolithionie-based electrolyte
An: Li metal

**FIG. 1B**

## WIDE STABILTY RANGE

Cat: *e.g.*, NCM, LNMO, S
SE: Cryolithionite
An: Li metal

**FIG. 1C**

FIG. 2A

FIG. 2B

**FIG. 3A**

**FIG. 3B**

**FIG. 4**

**FIG. 5**

**FIG. 6**

FIG. 7

Europäisches
Patentamt

European
Patent Office

Office européen
des brevets

# EUROPEAN SEARCH REPORT

Application Number

EP 19 15 9662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/372199 A1 (MEYER JOERG [DE] ET AL) 24 December 2015 (2015-12-24) * abstract * * paragraphs [0040], [0051] * * figure 5 * ----- | 1-18 | INV. H01M10/052 C01F5/00 C01F7/00 C01F11/00 C01G15/00 |
| A | S GELLER: "REFINEMENT OF THE CRYSTAL STRUCTURE OF CRYOLITHIONITE, {Na3}[Al2](Li3)F12", THE AMERICAN MINERALOGIST, vol. 56, no. 1-2, 1 January 1971 (1971-01-01), pages 18-23, XP055611893, ISSN: 1945-3027 * the whole document * ----- | 1-18 | H01M10/0562 H01M10/42 C01G3/00 C01G9/00 C01G17/00 |
| A | TAKEDA Y ET AL: "High pressure form of fluoride garnets Na3M2Li3F12 (M=Al & Fe)", MATERIALS RESEARCH BULLETIN, ELSEVIER, KIDLINGTON, GB, vol. 12, no. 7, 1 July 1977 (1977-07-01), pages 689-692, XP024077218, ISSN: 0025-5408, DOI: 10.1016/0025-5408(77)90127-1 [retrieved on 1977-07-01] * the whole document * ----- | 1-18 | |
| A | ANDRZEJ GRZECHNIK ET AL: "The compressibility mechanism of Li3Na3In2F12 garnet", JOURNAL OF PHYSICS: CONDENSED MATTER, INSTITUTE OF PHYSICS PUBLISHING, BRISTOL, GB, vol. 18, no. 10, 15 March 2006 (2006-03-15), pages 2915-2924, XP020101715, ISSN: 0953-8984, DOI: 10.1088/0953-8984/18/10/014 * the whole document * ----- | 1-18 | |

TECHNICAL FIELDS
SEARCHED (IPC)

H01M
C01G
C01F

The present search report has been drawn up for all claims

| Place of search | Date of completion of the search | Examiner |
|---|---|---|
| Munich | 9 August 2019 | Gregori, Giuliano |

EPO FORM 1503 03.82 (P04C01)

**ANNEX TO THE EUROPEAN SEARCH REPORT
ON EUROPEAN PATENT APPLICATION NO.**

EP 19 15 9662

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2019

| Patent document cited in search report | Publication date | Patent family member(s) | Publication date |
|---|---|---|---|
| US 2015372199 A1 | 24-12-2015 | CN 102782086 A | 14-11-2012 |
| | | EP 2513247 A2 | 24-10-2012 |
| | | JP 5698762 B2 | 08-04-2015 |
| | | JP 2013514655 A | 25-04-2013 |
| | | KR 20120104377 A | 20-09-2012 |
| | | RU 2012130098 A | 27-01-2014 |
| | | TW 201145603 A | 16-12-2011 |
| | | US 2012305972 A1 | 06-12-2012 |
| | | US 2015372199 A1 | 24-12-2015 |
| | | WO 2011073871 A2 | 23-06-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2176190 A1
- US 20150118571 A1
- US 20140193695 A1


**Non-patent literature cited in the description**

- **ZHU et al.** Origin of outstanding stability in the lithium solid electrolyte materials: Insights from thermodynamic analyses based on first-principles calculations. *ACS Appl. Mater. Inter.,* 2015, vol. 7, 23685-23693
- **R. D. SHANNON.** Revised effective ionic radii and systematic studies of interatomic distances in halides and chalcogenides. *Acta Crystallogr,* 1976, vol. A32, 751-757
- **ZEIER W.** Structural limitations for optimizing garnet-type solid electrolytes: a perspective. *Dalton Trans.,* 2014, vol. 43, 16133-16138
- **STRUZIK et al.** A Simple and Fast Electrochemical CO2 Sensor based on Li7La3Zr2O12 for Environmental Monitoring. *Advanced Materials,* 2018, vol. 40 (44), 1804098
- **LIU et al.** Achieving high capacity in bulk-type solid-state lithium ion battery based on Li6.75La3Zr1.75Ta0.25O12 electrolyte: Interfacial resistance. *J. Power Sources,* 2016, vol. 324, 349-357
- **KAMAYA N. et al.** A lithium superionic conductor. *Nat. Mater.,* 2011, vol. 10, 682-686
- **O'CALLAGHAN et al.** Switching on Fast Lithium Ion Conductivity in Garnets: The Structure and Transport Properties of Li3+xNd3Te2-xSbxO. *Chem. Mater.,* 2008, vol. 20, 2360
- **REDHAMMER, D. et al.** A single crystal X-ray and powder neutron diffraction study on NASICON-type Li1+xAlxTi2-x(PO4)3 (0 ≤ x ≤ 0.5) crystals. *Implications on ionic conductivity Solid State Sci.,* 2016, vol. 60, 99-107
- **SHANNON R.D.** Revised effective ionic radii and systematic studies of interatomic distances in halides and chalcogenides. *Acta Crystallogr,* 1976, vol. A32, 751-757
- **ZHU et al.** Origin of outstanding stability in the lithium solid electrolyte materials: Insights from thermodynamic analyses based on first-principles calculations. *ACS Appl. Mater.,* 2015, vol. 7, 23685-23693